# EUROPEAN PATENT SPECIFICATION

(11) **EP 4 328 700 B1**
(45) Date of publication and mention of the grant of the patent: **29.10.2025**
(21) Application number: 22806339.2
(22) Date of filing: 30.03.2022
(51) Int. Cl.: G05D 1/247, G05D 1/686, G05D 105/28, G05D 109/10, H04W 12/06

(54) **AUTOMATIC FOLLOWING METHOD AND SYSTEM FOR CARRIER VEHICLE, AND CARRIER VEHICLE**
AUTOMATISCHES FOLGEVERFAHREN UND -SYSTEM FÜR EIN TRÄGERFAHRZEUG UND TRÄGERFAHRZEUG
PROCÉDÉ ET SYSTÈME DE SUIVI AUTOMATIQUE POUR VÉHICULE PORTEUR, ET VÉHICULE PORTEUR

(30) Priority: 12.05.2021 CN 202110518691
(43) Date of publication of application: 28.02.2024
(73) Proprietor: Great Wall Motor Company Limited, Hebei 071000 (CN)
(72) Inventor: GONG, Chenglong, Baoding, Hebei 071000 (CN); WANG, Guangdong, Baoding, Hebei 071000 (CN); JIN, Yutao, Baoding, Hebei 071000 (CN); WANG, Jinguang, Baoding, Hebei 071000 (CN); LI, Bo, Baoding, Hebei 071000 (CN)
(74) Representative: Klunker IP Patentanwälte PartG mbB
(86) International application number: PCT/CN2022/084221
(87) International publication number: WO 2022/237369

(56) References cited:
- AU-A4- 2018 101 873
- CN-A- 102 932 739
- CN-A- 110 448 025
- CN-A- 110 559 628
- CN-A- 110 597 270
- CN-A- 113 253 766
- CN-U- 209 290 555
- CN-U- 209 290 555
- US-A1- 2014 136 414
- US-A1- 2018 232 839
- US-B1- 10 180 683

## Description

The present application claims the priority of the Chinese patent application filed on May 12th, 2021 before the China National Intellectual Property Administration with the application number of 202110518691.4 and the title of " **METHOD AND SYSTEM FOR AUTOMATIC FOLLOWING OF OBJECT CARRYING VEHICLE, AND OBJECT CARRYING VEHICLE.**

### TECHNICAL FIELD

The present application relates to the technical field of vehicles, and particularly relates to a method for automatic following of an object carrying vehicle, a system for automatic following of an object carrying vehicle and an object carrying vehicle.

### BACKGROUND

In the related art, all of the locating labels for the automatic following of object carrying vehicles are external locating labels, for example, products such as a remote controller and a bracelet. In usage, the user is required to go to a specified location to acquire or replace the locating label. After the locating label is acquired, the user is required to actively turn on the power-supply switch of the locating label and the power-supply switch of the object carrying vehicle. After being used completely, the locating label is further required to be returned to a specified location by the user. The whole process is tedious, and is inconvenient for the user to use, which results in complaint from the user.

CN 110 448 025 A discloses an automatic follow suitcase that includes a control system with removable battery, drive wheels, proximity sensors, Bluetooth communication for positioning via a mobile device, QR or barcode identification, and functions such as collision prevention, battery status alerts, and user control through a smartphone app or mini-program

CN 209 290 555 U discloses a multifunctional follow car that includes a control system with a microcontroller connected to modules for driving, following, obstacle avoidance, and communication, featuring a wireless positioning system, electronic tag for target tracking, QR code for control via a mobile app, lockable storage compartment, optional USB or wireless charging modules, a display for charging options, and compatibility with accessories like wristbands or watches.

### SUMMARY

In view of the above, the present application provides a method for automatic following of an object carrying vehicle. As compared with the prior art, the method for automatic following of an object carrying vehicle, can simplify the step of acquiring the locating label, and does not require the user to actively turn on the power-supply switch of the locating label, which can facilitate the usage by the user, and can prevent complaint from the user.

In order to achieve the above object, the invention is set out in the appended set of claims.

The technical solutions of the present application are realized as follows:
a method for automatic following of an object carrying vehicle, including: receiving an authentication request sent by a mobile terminal, wherein the authentication request is generated by the mobile terminal by identifying an identification code on the object carrying vehicle; authenticating the mobile terminal according to the authentication request, and controlling the object carrying vehicle to be powered on and started up and output a locating label after the authentication is passed; receiving a locating signal emitted by the locating label; and determining a position relation between the object carrying vehicle and the locating label according to the locating signal, and controlling the object carrying vehicle to follow the locating label according to the position relation.

As compared with the prior art, the method for automatic following of an object carrying vehicle according to the present application, can simplify the step of acquiring the locating label, and does not require the user to actively turn on the power-supply switch of the locating label, which can simplify the whole usage process, can facilitate the usage by the user, and can prevent complaint from the user.

Another object of the present application is to provide a computer-readable storage medium.

In order to achieve the above object, the technical solutions of the present application are realized as follows:
a computer-readable storage medium, wherein the computer-readable storage medium stores a program for automatic following of an object carrying vehicle, and when the program for automatic following of an object carrying vehicle is executed by a processor, the method for automatic following of an object carrying vehicle stated above can be implemented.

In the computer-readable storage medium according to the present application, the program for automatic following of an object carrying vehicle, when executed by a processor, can simplify the step of acquiring the locating label, and does not require the user to actively turn on the power-supply switch of the locating label, which can simplify the whole usage process, can facilitate the usage by the user, and can prevent complaint from the user.

Another object of the present application is to provide an object carrying vehicle.

In order to achieve the above object, the technical solutions of the present application are realized as follows:
an object carrying vehicle, wherein the object carrying vehicle includes a memory, a processor and a program for automatic following of an object carrying vehicle stored in the memory and executable in the processor, and when the processor executes the program for automatic following of an object carrying vehicle, the method for automatic following of an object carrying vehicle stated above can be implemented.

In the object carrying vehicle according to the present application, the processor, when executing the program for automatic following of an object carrying vehicle, can simplify the step of acquiring the locating label, and does not require the user to actively turn on the power-supply switch of the locating label, which can simplify the whole usage process, can facilitate the usage by the user, and can prevent complaint from the user.

Another object of the present application is to provide a system for automatic following of an object carrying vehicle.

In order to achieve the above object, the technical solutions of the present application are realized as follows:
a system for automatic following of an object carrying vehicle, wherein the system includes an object carrying vehicle, the object carrying vehicle is installed with a locating label, and the object carrying vehicle includes: a first receiving module configured for receiving an authentication request sent by a mobile terminal, wherein the authentication request is generated by the mobile terminal by identifying an identification code on the object carrying vehicle; an authenticating module configured for authenticating the mobile terminal according to the authentication request, and controlling the object carrying vehicle to be powered on and started up and output the locating label after the authentication is passed; a second receiving module configured for receiving a locating signal emitted by the locating label; and a follow controlling module configured for determining a position relation between the object carrying vehicle and the locating label according to the locating signal, and controlling the object carrying vehicle to follow the locating label according to the position relation.

The system for automatic following of an object carrying vehicle has the same advantages as those of the above method for automatic following of an object carrying vehicle over the prior art, which are not discussed further herein.

### BRIEF DESCRIPTION OF THE DRAWINGS

The drawings, which form part of the present application, are intended to provide a further understanding of the present application. The illustrative embodiments of the present application and their explanation are intended to interpret the present application, and do not inappropriately limit the present application. In the drawings:
FIG. 1 is a flow chart of a method for automatic following of an object carrying vehicle according to an embodiment of the present application;
FIG. 2 is a schematic block diagram of a system for automatic following of an object carrying vehicle according to an embodiment of the present application when the locating label is not taken out;
FIG. 3 is a schematic block diagram of a system for automatic following of an object carrying vehicle according to an embodiment of the present application when the locating label is taken out; and
FIG. 4 is a schematic block diagram of a processor, a memory, a communication interface and a communication bus according to an embodiment of the present application.

Description of the reference numbers:
system for automatic following of an object carrying vehicle 100;
object carrying vehicle 10; object storing box 11;
locating label 20;
mobile terminal 30;
locating base station 40; signal receiving device 50; resolving unit 60; entire-vehicle controller 70;
first receiving module 90; authenticating module 91; second receiving module 92; and follow controlling module 93.

### DETAILED DESCRIPTION

It should be noted that, subject to the avoiding of any conflict, the embodiments and the features of the embodiments of the present application may be combined.

The present application will be described in detail below with reference to the drawings and the embodiments.

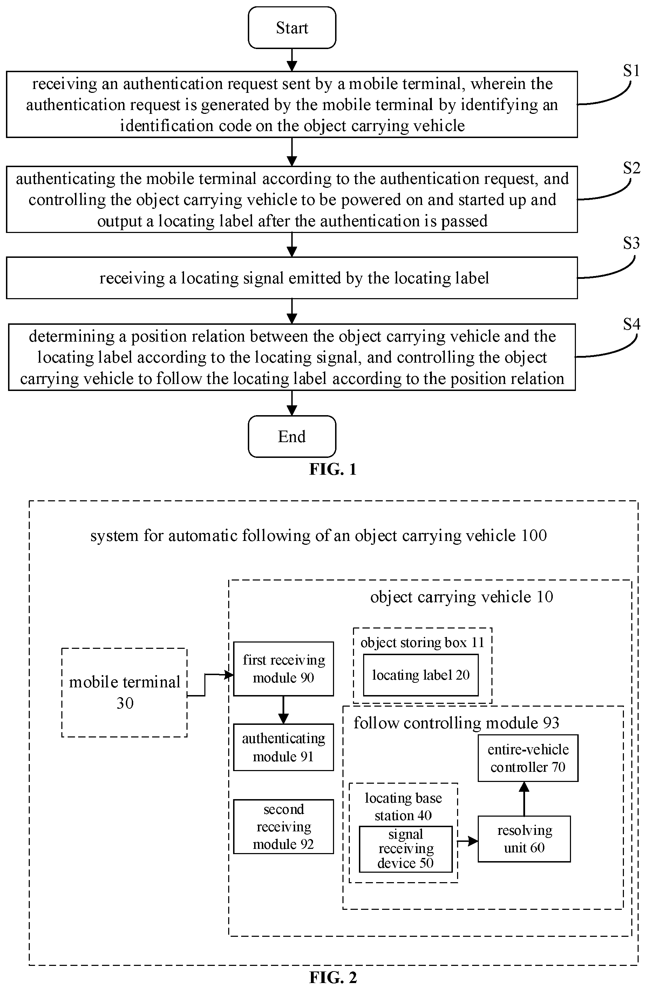

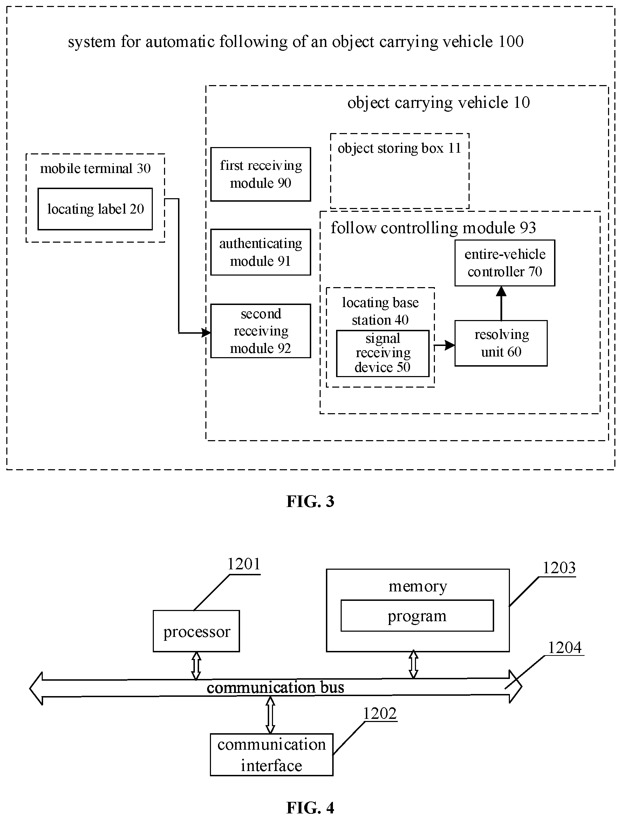

As shown in FIG. 2 and FIG. 3, the system for automatic following of an object carrying vehicle 100 according to the embodiments of the present application includes an object carrying vehicle 10, and the object carrying vehicle 10 is installed with a locating label 20. The object carrying vehicle 10 includes a first receiving module 90, an authenticating module 91, a second receiving module 92 and a follow controlling module 93.

The first receiving module 90 is configured for receiving an authentication request sent by a mobile terminal, wherein the authentication request is generated by the mobile terminal by identifying an identification code on the object carrying vehicle 10. The mobile terminal 30 may generate an authentication request by identifying an identification code on the object carrying vehicle 10, and send the authentication request to the object carrying vehicle 10. The mobile terminal 30 may be but is not limited to a mobile phone or a tablet personal computer. The object carrying vehicle 10 is provided with an identification code. The user may generate the authentication request by using the mobile terminal 30 to identify the identification code on the object carrying vehicle 10. The user may generate the authentication request by using the mobile terminal 30 to scan the identification code on the object carrying vehicle 10. Furthermore, the mobile terminal 30 may send the authentication request to the object carrying vehicle 10 after the authentication request is generated, and the first receiving module 90 may receive the authentication request sent by the mobile terminal 30.

The authenticating module 91 may authenticate the mobile terminal 30 according to the authentication request, and control the object carrying vehicle 10 to be powered on and started up and output a locating label 20 after the authentication is passed. The first receiving module 90 may receive the authentication request sent by the mobile terminal 30. Furthermore, the first receiving module 90 may send the received authentication request to the authenticating module 91. The authenticating module 91 may authenticate the mobile terminal 30 according to the authentication request. After the authentication request is passed, the authenticating module 91 may control the object carrying vehicle 10 to be powered on and started up and output the locating label 20, so that the user takes out the locating label 20.

The second receiving module 92 is configured for receiving the locating signal emitted by the locating label 20. The follow controlling module 93 is configured for determining the position relation between the object carrying vehicle 10 and the locating label 20 according to the locating signal. Furthermore, the follow controlling module 93 is configured for controlling the object carrying vehicle 10 to follow the locating label 20 according to the position relation. The locating label 20 may send the locating signal to the object carrying vehicle 10. The second receiving module 92 may receive the locating signal sent by the locating label 20. Furthermore, the second receiving module 92 may send the received locating signal to the follow controlling module 93. The follow controlling module 93 may determine the position relation between the object carrying vehicle 10 and the locating label 20 according to the locating signal. Furthermore, the follow controlling module 93 may control the object carrying vehicle 10 to follow the locating label 20 according to the position relation, to realize the function of automatic following of the object carrying vehicle 10.

The object carrying vehicle 10 may be used to carry goods. The identification code may be a two-dimensional code. The user may generate the authentication request by using the mobile terminal 30 to scan the two-dimensional code on the object carrying vehicle 10. The object carrying vehicle 10 may be provided with an object storing box 11 having a lock, and the locating label 20 may be placed in the object storing box 11. After the authentication request is sent to the object carrying vehicle 10, the first receiving module 90 may receive the authentication request sent by the mobile terminal 30. Furthermore, the first receiving module 90 may transmit the authentication request to the authenticating module 91. The authenticating module 91 may authenticate the mobile terminal 30 according to the authentication request. After the authentication request is passed, the authenticating module 91 may control the object carrying vehicle 10 to be powered on and started up and output the locating label 20, and the locating label 20 may be ejected from the object storing box 11 to facilitate the user to take the locating label 20. Furthermore, when the locating label 20 is ejected from the object storing box 11, the locating label 20 may be automatically started up, at which point the locating label 20 may emit the signal.

Subsequently, the locating label 20 may send the locating signal to the object carrying vehicle 10. The second receiving module 92 may receive the locating signal sent by the locating label 20. Furthermore, the second receiving module 92 may send the received locating signal to the follow controlling module 93. The follow controlling module 93 may determine the position relation between the object carrying vehicle 10 and the locating label 20 according to the locating signal. Furthermore, the follow controlling module 93 may control the driving wheels of the object carrying vehicle 10 to rotate and follow the locating label 20 according to the position relation, to realize the function of automatic following of the object carrying vehicle 10. After being used completely, the locating label 20 may be inserted into the object carrying vehicle 10 by the user to complete the usage process. For example, the user may insert the locating label 20 into the object storing box 11 to complete the usage process. If the object carrying vehicle 10 is paid to use, after the user inserts the locating label 20 into the object storing box 11 to complete the usage process, it is required to pay for settlement.

In the prior art, all of the locating labels for the automatic following of object carrying vehicles are external locating labels, for example, products such as a remote controller and a bracelet. In usage, the user is required to go to a specified location to acquire or replace the locating label. After the locating label is acquired, the user is required to actively turn on the power-supply switch of the locating label and the power-supply switch of the object carrying vehicle. After being used completely, the locating label is further required to be returned to a specified location by the user. The whole process is tedious, and is inconvenient for the user to use, which results in complaint from the user.

However, in the present application, the user is not required to go to a specified location to acquire or replace the locating label 20. The user can generate the authentication request directly by using the mobile terminal 30 to scan the identification code on the object carrying vehicle 10. After the authentication request is passed, the object carrying vehicle 10 can automatically output the locating label 20, so that the user takes out the locating label 20.

Furthermore, after the authentication request is passed, the authenticating module 91 can control the object carrying vehicle 10 to be powered on and started up, and, when the locating label 20 is outputted from the object carrying vehicle 10, the locating label 20 can be automatically started up, whereby the user is not required to actively turn on the power-supply switches of the locating label 20 and the object carrying vehicle 10. In addition, after being used completely, the locating label 20 can be directly placed back into the object storing box 11 by the user to complete the usage process, whereby the user is not required to return the locating label 20 to a specified location. As compared with the prior art, the system 100 for automatic following of an object carrying vehicle according to the present application can simplify the whole usage process, can facilitate the usage by the user, and can prevent complaint from the user.

Moreover, because the user is not required to go to a specified location to acquire or replace the locating label 20, and the user is not required to go to a specified location to return the locating label 20 either, the cost for managing the locating label 20 can be reduced.

Accordingly, by using the method for automatic following of an object carrying vehicle 10 according to the present application, as compared with the prior art, the step of acquiring the locating label 20 can be simplified, and the user is not required to actively turn on the power-supply switches of the locating label 20 and the object carrying vehicle 10, which can simplify the whole usage process, can facilitate the usage by the user, and can prevent complaint from the user.

As some embodiments of the present application, the object carrying vehicle 10 may have an entire-vehicle switch. The entire-vehicle switch may be provided at an outer position of the object carrying vehicle 10, and the entire-vehicle switch may also be provided inside the object storing box 11 to prevent being randomly started up by persons. After the object storing box 11 is locked, the object carrying vehicle 10 is powered off, and the user cannot manipulate the entire-vehicle switch. After the object storing box 11 is opened, the object carrying vehicle 10 may be automatically powered on. Moreover, the object carrying vehicle 10 may always supply electric power to the object storing box 11; in other words, the object storing box 11 is in the powering-on state in real time, which can prevent that the object storing box 11 cannot be opened after the authentication request is passed, and in turn can prevent that the locating label 20 cannot be ejected from the object storing box 11 after the authentication request is passed.

The locating label 20 and the object storing box 11 may have individual storage rooms or structures. When the locating label 20 is inserted into the object storing box 11, that whether the locating label 20 is successfully returned may be determined by using methods such as a contact-type spring ejector pin, a USB port, a type C port and magnetic induction. Among them, that whether the locating label 20 is successfully returned may be determined by communication using one or two pins of the contact-type spring ejector pin, or that whether the locating label 20 is successfully returned may be determined by communication using the USB port, the type C port and another commonly used communication interface (for example, a mobile-phone data-transmission interface), or that whether the locating label 20 is successfully returned may be determined by inducing the magnetism between the locating label 20 and the object storing box 11.

As some embodiments of the present application, the locating label 20 itself has an electric power supply. After the locating label 20 is inserted into the object carrying vehicle 10, the object carrying vehicle 10 may utilize its own electric quantity to charge the locating label 20, which can prevent insufficient electric quantity of the locating label 20 in the usage process.

In some embodiments of the present application, the locating label 20 may be configured for realizing bonding with the mobile terminal 30. The mode for bonding the locating label 20 and the mobile terminal 30 may include magnetic attraction, snap fitting and adhesive bonding, and the locating label 20 may be installed to the mobile terminal 30. After the object carrying vehicle 10 outputs the locating label 20, the user may take out the locating label 20 and bond the locating label 20 with the mobile terminal 30, and the user may install the locating label 20 to the mobile terminal 30 by the mode of magnetic attraction, snap fitting or adhesive bonding, to realize the bonding of the mobile terminal 30 with the locating label 20.

In the prior art, the user is required to wear the locating label on a certain position of the body; for example, a remote controller is required to be placed on a hand of the user, and a bracelet is required to be worn at a wrist, which easily causes losing of the locating label.

However, in the present application, the user may install the locating label 20 to the mobile terminal 30 by the mode of magnetic attraction, snap fitting or adhesive bonding, which can prevent losing of the locating label 20, and in turn can prevent economic loss caused by losing of the locating label 20.

In some embodiments of the present application, the follow controlling module 93 may be further configured for, before determining the position relation between the object carrying vehicle 10 and the locating label 20 according to the locating signal, identifying whether the locating signal emitted by the locating label 20 is valid, and, if the locating signal emitted by the locating label 20 is invalid, receiving the standby locating signal emitted by the mobile terminal 30 by using the second receiving module 92. The mobile terminal 30 may establish a communicative connection with the locating label 20 after the object carrying vehicle 10 outputs the locating label 20, acquire the information of the locating label 20, and generate the standby locating signal according to the information of the locating label 20.

After the object carrying vehicle 10 outputs the locating label 20, the mobile terminal 30 may establish a communicative connection with the locating label 20. After the mobile terminal 30 establishes the communicative connection with the locating label 20, the mobile terminal 30 may acquire the information of the locating label 20, and the mobile terminal 30 may generate the standby locating signal according to the acquired information of the locating label 20.

After the mobile terminal 30 has established the communicative connection with the locating label 20, the mobile terminal 30 may acquire the electric-quantity information and the failure information of the locating label 20 and other data of the locating label 20.

The mobile terminal 30 may determine whether the locating label 20 is in the abnormal states according to the information of the locating label 20 that it acquires, wherein the abnormal states may include but are not limited to a low-electric-quantity state, a lack-of-electricity state and a failure state.

The mobile terminal 30 may determine whether the locating label 20 is in the low-electric-quantity state or the lack-of-electricity state according to the electric-quantity information of the locating label 20 that it acquires. If the mobile terminal 30 determines that the locating label 20 is in the low-electric-quantity state or the lack-of-electricity state according to the electric-quantity information of the locating label 20, then the mobile terminal 30 may generate and emit the standby locating signal according to the information of the locating label 20.

The mobile terminal 30 may determine whether the locating label 20 is in the failure state according to the failure information of the locating label 20 that it acquires. If the mobile terminal 30 determines that the locating label 20 is in the failure state according to the failure information of the locating label 20, then the mobile terminal 30 may generate and emit the standby locating signal according to the information of the locating label 20.

Before the follow controlling module 93 determines the position relation between the object carrying vehicle 10 and the locating label 20 according to the locating signal emitted by the locating label 20, the follow controlling module 93 may identify the locating signal emitted by the locating label 20, to identify whether the locating signal emitted by the locating label 20 is valid. If the locating signal emitted by the locating label 20 is valid, then the follow controlling module 93 may determine the position relation between the object carrying vehicle 10 and the locating label 20 according to the locating signal. Subsequently, the follow controlling module 93 may control the driving wheels of the object carrying vehicle 10 to rotate and follow the locating label 20 according to the position relation, to realize the function of automatic following of the object carrying vehicle 10.

If the follow controlling module 93 identifies that the locating signal emitted by the locating label 20 is invalid (if the locating label 20 is in the failure state or the low-electric-quantity state, then the object carrying vehicle 10 identifies that the locating signal emitted by the locating label 20 is invalid), or the follow controlling module 93 cannot receive the locating signal emitted by the locating label 20, then the second receiving module 92 may receive the standby locating signal emitted by the mobile terminal 30. Furthermore, the second receiving module 92 may send the received standby locating signal to the follow controlling module 93. After the follow controlling module 93 receives the standby locating signal, the follow controlling module 93 may determine the position relation between the object carrying vehicle 10 and the mobile terminal 30 according to the standby locating signal. Subsequently, the follow controlling module 93 may control the driving wheels of the object carrying vehicle 10 to rotate and follow the mobile terminal 30 according to the position relation, to realize the function of automatic following of the object carrying vehicle 10.

Accordingly, when the locating label 20 is in the abnormal states, the follow controlling module 93 can determine the position relation between it and the mobile terminal 30 according to the standby locating signal, to realize the function of automatic following of the object carrying vehicle 10, which can improve the reliability of the function of automatic following of the object carrying vehicle 10.

In some embodiments of the present application, the follow controlling module 93 may be further configured for controlling a locating base station 40 in the object carrying vehicle 10 to be started up after the mobile terminal 30 and the locating label 20 are bonded, receiving the matching signal sent by the locating label 20 by using the locating base station 40, and matching the locating label 20 according to the matching signal, to receive the locating signal emitted by the locating label 20 by using the second receiving module 92 when the matching succeeds.

The object carrying vehicle 10 may be provided with a locating base station 40, and the follow controlling module 93 may control the locating base station 40 to be started up after the mobile terminal 30 and the locating label 20 are bonded.

After the locating base station 40 is started up, the follow controlling module 93 may receive the matching signal sent by the locating label 20 by using the locating base station 40. Furthermore, the follow controlling module 93 may match the locating label 20 according to the received matching signal. After the follow controlling module 93 and the locating label 20 are successfully matched, the follow controlling module 93 may receive the locating signal emitted by the locating label 20 by using the second receiving module 92.

The locating label 20 may send to the locating base station 40 a matching signal having a specified ID (identity document), and the follow controlling module 93 may receive the matching signal having the specified ID sent by the locating label 20 by using the locating base station 40, to match with the locating label 20 according to the matching signal.

After the follow controlling module 93 and the locating label 20 are successfully matched, the locating label 20 may continuously emit the locating signal having the specified ID. The object carrying vehicle 10 may further include a signal receiving device 50, a resolving unit 60 and an entire-vehicle controller 70. The quantity of the signal receiving device 50 may be multiple, and the quantity of the signal receiving device 50 may be two. The signal receiving device 50 may be part of the locating base station 40. The second receiving module 92 may receive the locating signal emitted by the locating label 20. Furthermore, the second receiving module 92 may transmit the locating signal to the signal receiving device 50. The signal receiving device 50 may transmit the received signal to the locating base station 40. The locating base station 40 may filter and optimize the received signal data, which can prevent data error or deviation in the signal transmission process caused by external influence.

Subsequently, the locating base station 40 may send the optimized signal data to the resolving unit 60. The resolving unit 60 may resolve the relative angle and the distance between the locating label 20 and the locating base station 40 in the object carrying vehicle 10 according to the received signal data. After resolving the relative angle and the distance between the locating label 20 and the locating base station 40 in the object carrying vehicle 10, the resolving unit 60 may send the information on the relative angle and the distance to the entire-vehicle controller 70. The entire-vehicle controller 70 may control the rotational speed and the rotation direction of the driving wheels according to preset required values of the distance and the angle that are required to be maintained to ensure the relative position between the object carrying vehicle 10 and the locating label 20.

The locating label 20 may also emit the information data by using UWB (Ultra-Wide Band), ultrasonic wave or Bluetooth.

Accordingly, it can be ensured that the object carrying vehicle 10 can accurately ensure the relative position with the locating label 20, which can ensure the usage reliability of the function of automatic following of the object carrying vehicle 10.

Moreover, after the authentication request is passed, if the mobile terminal 30 establishes the communicative connection with the locating label 20, then the mobile terminal 30 may acquire the information of the locating label 20 and may be bonded to the locating label 20. When the bonding succeeds, the mobile terminal 30 may replace the locating label 20 to send to the locating base station 40 the matching signal having the specified ID, and the follow controlling module 93 may receive the matching signal having the specified ID sent by the mobile terminal 30 by using the locating base station 40, to match with the mobile terminal 30 according to the matching signal. Furthermore, after the follow controlling module 93 and the mobile terminal 30 are successfully matched, the mobile terminal 30 may continuously emit the locating signal having the specified ID.

FIG. 1 is a flow chart of a method for automatic following of an object carrying vehicle according to an embodiment of the present application. The system for automatic following of an object carrying vehicle according to the above embodiments may implement the method for automatic following of an object carrying vehicle. As shown in FIG. 1, the method for automatic following of an object carrying vehicle includes the following steps:
S1: receiving an authentication request sent by a mobile terminal, wherein the authentication request is generated by the mobile terminal by identifying an identification code on the object carrying vehicle. It should be explained that the system for automatic following of an object carrying vehicle includes an object carrying vehicle, and the object carrying vehicle is installed with a locating label. The object carrying vehicle includes a first receiving module, an authenticating module, a second receiving module and a follow controlling module.
   The mobile terminal may generate an authentication request by identifying an identification code on the object carrying vehicle, and send the authentication request to the object carrying vehicle. The mobile terminal may be but is not limited to a mobile phone or a tablet personal computer. The object carrying vehicle is provided with an identification code. The user may generate the authentication request by using the mobile terminal to identify the identification code on the object carrying vehicle. The user may generate the authentication request by using the mobile terminal to scan the identification code on the object carrying vehicle. Furthermore, after the authentication request is generated, the mobile terminal may send the authentication request to the object carrying vehicle, and the first receiving module may receive the authentication request sent by the mobile terminal.
S2: authenticating the mobile terminal according to the authentication request, and controlling the object carrying vehicle to be powered on and started up and output a locating label after the authentication is passed. The first receiving module may receive the authentication request sent by the mobile terminal. Furthermore, the first receiving module may send the received authentication request to the authenticating module. The authenticating module may authenticate the mobile terminal according to the authentication request. After the authentication request is passed, the authenticating module may control the object carrying vehicle to be powered on and started up and output the locating label, so that the user takes out the locating label.
S3: receiving a locating signal emitted by the locating label. The second receiving module may receive the locating signal sent by the locating label.
S4: determining a position relation between the object carrying vehicle and the locating label according to the locating signal, and controlling the object carrying vehicle to follow the locating label according to the position relation. The locating label may send the locating signal to the object carrying vehicle. The second receiving module may receive the locating signal sent by the locating label. Furthermore, the second receiving module may send the received locating signal to the follow controlling module. The follow controlling module may determine the position relation between the object carrying vehicle and the locating label according to the locating signal. Furthermore, the follow controlling module may control the object carrying vehicle to follow the locating label according to the position relation, to realize the function of automatic following of the object carrying vehicle.

The object carrying vehicle may be used to carry goods. The identification code may be a two-dimensional code. The user may generate the authentication request by using the mobile terminal to scan the two-dimensional code on the object carrying vehicle. The object carrying vehicle may be provided with an object storing box having a lock, and the locating label may be placed in the object storing box. After the authentication request is sent to the object carrying vehicle, the first receiving module may receive the authentication request sent by the mobile terminal. Furthermore, the first receiving module may transmit the authentication request to the authenticating module. The authenticating module may authenticate the mobile terminal according to the authentication request. After the authentication request is passed, the authenticating module may control the object carrying vehicle to be powered on and started up and output the locating label, and the locating label may be ejected from the object storing box to facilitate the user to take the locating label. Furthermore, when the locating label is ejected from the object storing box, the locating label may be automatically started up, at which point the locating label may emit the signal.

Subsequently, the locating label may send the locating signal to the object carrying vehicle. The second receiving module may receive the locating signal sent by the locating label. Furthermore, the second receiving module may send the received locating signal to the follow controlling module. The follow controlling module may determine the position relation between the object carrying vehicle and the locating label according to the locating signal. Furthermore, the follow controlling module may control the driving wheels of the object carrying vehicle to rotate and follow the locating label according to the position relation, to realize the function of automatic following of the object carrying vehicle. After being used completely, the locating label may be inserted into the object carrying vehicle by the user to complete the usage process. For example, the user may insert the locating label into the object storing box to complete the usage process. If the object carrying vehicle is paid to use, after the user inserts the locating label into the object storing box to complete the usage process, it is required to pay for settlement.

In the prior art, all of the locating labels for the automatic following of object carrying vehicles are external locating labels, for example, products such as a remote controller and a bracelet. In usage, the user is required to go to a specified location to acquire or replace the locating label. After the locating label is acquired, the user is required to actively turn on the power-supply switch of the locating label and the power-supply switch of the object carrying vehicle. After being used completely, the locating label is further required to be returned to a specified location by the user. The whole process is tedious, and is inconvenient for the user to use, which results in complaint from the user.

However, in the present application, the user is not required to go to a specified location to acquire or replace the locating label. The user can generate the authentication request directly by using the mobile terminal to scan the identification code on the object carrying vehicle. After the authentication request is passed, the object carrying vehicle can automatically output the locating label, so that the user takes out the locating label.

Furthermore, after the authentication request is passed, the authenticating module can control the object carrying vehicle to be powered on and started up, and, when the locating label is outputted from the object carrying vehicle, the locating label can be automatically started up, whereby the user is not required to actively turn on the power-supply switches of the locating label and the object carrying vehicle. In addition, after being used completely, the locating label can be directly placed back into the object storing box by the user to complete the usage process, whereby the user is not required to return the locating label to a specified location. As compared with the prior art, the system for automatic following of an object carrying vehicle according to the present application can simplify the whole usage process, can facilitate the usage by the user, and can prevent complaint from the user.

Moreover, because the user is not required to go to a specified location to acquire or replace the locating label, and the user is also not required to go to a specified location to return the locating label either, the cost for managing the locating label can be reduced.

Accordingly, by using the method for automatic following of an object carrying vehicle according to the present application, as compared with the prior art, the step of acquiring the locating label can be simplified, and the user is not required to actively turn on the power-supply switches of the locating label and the object carrying vehicle, which can simplify the whole usage process, can facilitate the usage by the user, and can prevent complaint from the user.

As some embodiments of the present application, the object carrying vehicle may have an entire-vehicle switch. The entire-vehicle switch may be provided at an outer position of the object carrying vehicle, and the entire-vehicle switch may also be provided inside the object storing box to prevent being randomly started up by persons. After the object storing box is locked, the object carrying vehicle is powered off, and the user cannot manipulate the entire-vehicle switch. After the object storing box is opened, the object carrying vehicle may be automatically powered on. Moreover, the object carrying vehicle may always supply electric power to the object storing box; in other words, the object storing box is in the powering-on state in real time, which can prevent that the object storing box cannot be opened after the authentication request is passed, and in turn can prevent that the locating label cannot be ejected from the object storing box after the authentication request is passed.

The locating label and the object storing box may have individual storage rooms or structures. When the locating label is inserted into the object storing box, that whether the locating label is successfully returned may be determined by using methods such as a contact-type spring ejector pin, a USB port, a type C port and magnetic induction, wherein that whether the locating label is successfully returned may be determined by communication using one or two pins of the contact-type spring ejector pin, or that whether the locating label is successfully returned may be determined by communication using the USB port, the type C port and another commonly used communication interface (for example, a mobile-phone data-transmission interface), or that whether the locating label is successfully returned may be determined by inducing the magnetism between the locating label and the object storing box.

As some embodiments of the present application, the locating label itself has an electric power supply. After the locating label is inserted into the object carrying vehicle, the object carrying vehicle may utilize its own electric quantity to charge the locating label, which can prevent insufficient electric quantity of the locating label in the usage process.

In some embodiments of the present application, the locating label may be configured for realizing bonding with the mobile terminal. The mode for bonding the locating label and the mobile terminal may include magnetic attraction, snap fitting and adhesive bonding, and the locating label may be installed to the mobile terminal. After the object carrying vehicle outputs the locating label, the user may take out the locating label and bond the locating label with the mobile terminal, and the user may install the locating label to the mobile terminal by the mode of magnetic attraction, snap fitting or adhesive bonding, to realize the bonding of the mobile terminal with the locating label.

In the prior art, the user is required to wear the locating label on a certain position of the body; for example, a remote controller is required to be placed on a hand of the user, and a bracelet is required to be worn at a wrist, which easily causes losing of the locating label. However, in the present application, the user may install the locating label to the mobile terminal by the mode of magnetic attraction, snap fitting or adhesive bonding, which can prevent losing of the locating label, and in turn can prevent economic loss caused by losing of the locating label.

In some embodiments of the present application, after the object carrying vehicle outputs the locating label, the mobile terminal and the locating label may establish a communicative connection therebetween, to acquire the information of the locating label. Before the step of determining a position relation between the object carrying vehicle and the locating label according to the locating signal, the method further includes identifying whether the locating signal emitted by the locating label is valid, and, if the locating signal emitted by the locating label is invalid, receiving a standby locating signal emitted by the mobile terminal, wherein the standby locating signal is generated by the mobile terminal according to the information of the locating label.

After the object carrying vehicle outputs the locating label, the mobile terminal may establish a communicative connection with the locating label. After the mobile terminal establishes the communicative connection with the locating label, the mobile terminal may acquire the information of the locating label, and the mobile terminal may generate the standby locating signal according to the acquired information of the locating label.

After the mobile terminal establishes the communicative connection with the locating label, the mobile terminal may acquire the electric-quantity information and the failure information of the locating label and other data of the locating label.

The mobile terminal may determine whether the locating label is in the abnormal states according to the information of the locating label that it acquires, wherein the abnormal states may include but are not limited to a low-electric-quantity state, a lack-of-electricity state and a failure state.

The mobile terminal may determine whether the locating label is in the low-electric-quantity state or the lack-of-electricity state according to the electric-quantity information of the locating label that it acquires. If the mobile terminal determines that the locating label is in the low-electric-quantity state or the lack-of-electricity state according to the electric-quantity information of the locating label, then the mobile terminal may generate and emit the standby locating signal according to the information of the locating label.

The mobile terminal may determine whether the locating label is in the failure state according to the failure information of the locating label that it acquires. If the mobile terminal determines that the locating label is in the failure state according to the failure information of the locating label, then the mobile terminal may generate and emit the standby locating signal according to the information of the locating label.

Before the follow controlling module determines the position relation between the object carrying vehicle and the locating label according to the locating signal emitted by the locating label, the follow controlling module may identify the locating signal emitted by the locating label, to identify whether the locating signal emitted by the locating label is valid. If the locating signal emitted by the locating label is valid, then the follow controlling module may determine the position relation between the object carrying vehicle and the locating label according to the locating signal. Subsequently, the follow controlling module may control the driving wheels of the object carrying vehicle to rotate and follow the locating label according to the position relation, to realize the function of automatic following of the object carrying vehicle.

If the follow controlling module identifies that the locating signal emitted by the locating label is invalid (if the locating label is in the failure state or the low-electric-quantity state, then the object carrying vehicle identifies that the locating signal emitted by the locating label is invalid), or the follow controlling module cannot receive the locating signal emitted by the locating label, then the second receiving module may receive the standby locating signal emitted by the mobile terminal. Furthermore, the second receiving module may send the received standby locating signal to the follow controlling module. After the follow controlling module receives the standby locating signal, the follow controlling module may determine the position relation between the object carrying vehicle and the mobile terminal according to the standby locating signal. Subsequently, the follow controlling module may control the driving wheels of the object carrying vehicle to rotate and follow the mobile terminal according to the position relation, to realize the function of automatic following of the object carrying vehicle.

Accordingly, when the locating label is in the abnormal states, the follow controlling module can determine the position relation between it and the mobile terminal according to the standby locating signal, to realize the function of automatic following of the object carrying vehicle, which can improve the reliability of the function of automatic following of the object carrying vehicle.

In some embodiments of the present application, after the mobile terminal and the locating label are bonded, the method further includes controlling a locating base station in the object carrying vehicle to be started up, receiving a matching signal sent by the locating label by using the locating base station, and matching the locating label according to the matching signal, to receive the locating signal emitted by the locating label when the matching succeeds. It should be noted that the object carrying vehicle may be provided with a locating base station, and, after the mobile terminal and the locating label are bonded, the follow controlling module may control the locating base station to be started up.

After the locating base station is started up, the follow controlling module may receive the matching signal sent by the locating label by using the locating base station. Furthermore, the follow controlling module may match the locating label according to the received matching signal. After the follow controlling module and the locating label are successfully matched, the follow controlling module may receive the locating signal emitted by the locating label by using the second receiving module.

The locating label may send to the locating base station a matching signal having a specified ID (identity document), and the follow controlling module may receive the matching signal having the specified ID sent by the locating label by using the locating base station, to match with the locating label according to the matching signal.

Optionally, after the follow controlling module and the locating label are successfully matched, the locating label may continuously emit the locating signal having the specified ID. The object carrying vehicle may further include a signal receiving device, a resolving unit and an entire-vehicle controller. The quantity of the signal receiving device may be multiple, and the quantity of the signal receiving device may be two. The signal receiving device may be part of the locating base station. The second receiving module may receive the locating signal emitted by the locating label. Furthermore, the second receiving module may transmit the locating signal to the signal receiving device. The signal receiving device may transmit the received signal to the locating base station. The locating base station may filter and optimize the received signal data, which can prevent data error or deviation in the signal transmission process caused by external influence.

Subsequently, the locating base station may send the optimized signal data to the resolving unit. The resolving unit may resolve the relative angle and the distance between the locating label and the locating base station in the object carrying vehicle according to the received signal data. After resolving the relative angle and the distance between the locating label and the locating base station in the object carrying vehicle, the resolving unit may send the information on the relative angle and the distance to the entire-vehicle controller. The entire-vehicle controller may control the rotational speed and the rotation direction of the driving wheels according to preset required values of the distance and the angle that are required to be maintained, to ensure the relative position between the object carrying vehicle and the locating label.

The locating label may also emit the information data by using UWB (Ultra-Wide Band), ultrasonic wave or Bluetooth.

Accordingly, it can be ensured that the object carrying vehicle can accurately ensure the relative position with the locating label, which can ensure the usage reliability of the function of automatic following of the object carrying vehicle.

Moreover, it should be noted that, after the authentication request is passed, if the mobile terminal establishes the communicative connection with the locating label, then the mobile terminal may acquire the information of the locating label and may be bonded to the locating label. When the bonding succeeds, the mobile terminal may replace the locating label to send to the locating base station the matching signal having the specified ID, and the follow controlling module may receive the matching signal having the specified ID sent by the mobile terminal by using the locating base station, to match with the mobile terminal according to the matching signal. Furthermore, after the follow controlling module and the mobile terminal are successfully matched, the mobile terminal may continuously emit the locating signal having the specified ID.

In order to implement the above embodiments, the present application provides a computer-readable storage medium, wherein the computer-readable storage medium stores a program for automatic following of an object carrying vehicle, and when the program for automatic following of an object carrying vehicle is executed by a processor, the method for automatic following of an object carrying vehicle according to the above embodiments can be implemented.

The computer-readable storage medium according to the embodiments of the present application can simplify the step of acquiring the locating label 20, and does not require the user to actively turn on the power-supply switches of the locating label 20 and the object carrying vehicle 10, which can simplify the whole usage process, can facilitate the usage by the user, and can prevent complaint from the user.

In order to implement the above embodiments, the present application further provides an object carrying vehicle, wherein the object carrying vehicle includes a memory, a processor and a program for automatic following of an object carrying vehicle stored in the memory and executable in the processor, and when the processor executes the program for automatic following of an object carrying vehicle, the method for automatic following of an object carrying vehicle according to the above embodiments can be implemented.

The object carrying vehicle according to the embodiments of the present application, by using the processor to execute the program for automatic following of an object carrying vehicle stored in the memory, can simplify the step of acquiring the locating label 20, and does not require the user to actively turn on the power-supply switches of the locating label 20 and the object carrying vehicle 10, which can simplify the whole usage process, can facilitate the usage by the user, and can prevent complaint from the user.

As shown in FIG. 4, the object carrying vehicle may include at least one processor 1201, at least one communication interface 1202, at least one memory 1203 and at least one communication bus 1204. In the embodiments of the present application, the quantities of the processor 1201, the communication interface 1202, the memory 1203 and the communication bus 1204 are at least one, and the processor 1201, the communication interface 1202 and the memory 1203 complete the communication therebetween via the communication bus 1204.

The memory 1203 may be but is not limited to a Random Access Memory (RAM), a Read Only Memory (ROM), a Programmable Read-Only Memory (PROM), an Erasable Programmable Read-Only Memory (EPROM) and an Electric Erasable Programmable Read-Only Memory (EEPROM). The memory 1203 is configured for storing the program. The processor 1201 executes the program after receiving an executing instruction, to implement the steps of the method for automatic following of an object carrying vehicle according to the above embodiments.

The processor 1201 may be an integrated circuit chip, and has the capacity of processing signals. The processor may be a generic processor, including a Central Processing Unit (CPU), a Network Processor (NP) and so on. The processor may also be a Digital Signal Processor (DSP), an Application Specific Integrated Circuit (ASIC), a Field-Programmable Gate Array (FPGA), or another programmable logic device, discrete gate or transistor logic device, or discrete hardware component, and may implement or execute the methods, the steps and the logic block diagrams according to the embodiments of the present application. The generic processor may be a microprocessor, and the processor may also be any conventional processor.

It should be noted that the logics and/or steps described in the flow chart or in another manner herein, for example, may be deemed as a fixed-sequence list of executable instructions for implementing the logical functions, and may particularly be implemented in any computer-readable mediums, to be used by an instruction executing system, apparatus or device (for example, a computer-based system, a system including a processor, or another system that can read an instruction from an instruction executing system, apparatus or device and execute the instruction), or be used in combination with an instruction executing system, apparatus or device. In the specification, the "computer-readable medium" may refer to any device that can contain, store, communicate, send or transmit a program to be used by an instruction executing system, apparatus or device or be used in combination with an instruction executing system, apparatus or device. More particular examples of the computer-readable medium (non-exhaustive list) include: an electric connector (electronic device) having one or more wires, a portable computer disk cartridge (magnetic device), a Random Access Memory (RAM), a read-only memory (ROM), an erasable programmable read-only memory (EPROM or flash memory), an optical fiber device, and a portable compact-disk read-only memory (CDROM). In addition, the computer-readable medium may even be paper or another suitable medium on which the program can be printed, because the program may be obtained in an electronic mode by, for example, optically scanning the paper or another medium and then editing or interpreting or, if necessary, processing in another suitable manner, and then stored into a computer memory.

It should be understood that the parts of the present application may be implemented by hardware, software, firmware or a combination thereof. In the above embodiments, multiple steps or methods may be stored in a memory and implemented by suitable instructions executing a software or firmware executed by the system. For example, if they are implemented by hardware, as in another embodiment, they may be implemented by using any one or combination of the following techniques well known in the art: a discrete logic circuit having a logic gate circuit configured for implementing a logic function to data signals, a specific integrated circuit having a suitable combinational logic gate circuit, a programmable gate array (PGA), a field-programmable gate array (FPGA) and so on.

## Claims

1. A method for automatic following of an object carrying vehicle, wherein the method comprises:
receiving (S1) an authentication request sent by a mobile terminal, wherein the authentication request is generated by the mobile terminal by identifying an identification code on the object carrying vehicle;
authenticating (S2) the mobile terminal according to the authentication request, and controlling the object carrying vehicle to be powered on and started up and output a locating label after the authentication is passed so that a user can take out the locating label from the object carrying vehicle;
receiving (S3) a locating signal emitted by the locating label; and
determining (S4) a position relation between the object carrying vehicle and the locating label according to the locating signal, and controlling the object carrying vehicle to follow the locating label according to the position relation,
wherein the locating label is configured for realizing bonding with the mobile terminal, wherein a mode for bonding the locating label and the mobile terminal comprises magnetic attraction, snap fitting or adhesive bonding; and
the locating label is installed to the mobile terminal.

2. The method for automatic following of an object carrying vehicle according to claim 1 1, **characterized in that** after the object carrying vehicle outputs the locating label, a communicative connection is established between the mobile terminal and the locating label , to acquire information of the locating label; and
before the step of determining a position relation between the object carrying vehicle and the locating label according to the locating signal, the method further comprises identifying whether the locating signal emitted by the locating label is valid, and, if the locating signal emitted by the locating label is invalid, receiving a standby locating signal emitted by the mobile terminal, wherein the standby locating signal is generated by the mobile terminal according to the information of the locating label.

3. The method for automatic following of an object carrying vehicle according to any one of claims 1-2, **characterized in that** the method further comprises: after the mobile terminal and the locating label are bonded, controlling a locating base station in the object carrying vehicle to be started up, receiving a matching signal sent by the locating label by using the locating base station, and matching the locating label according to the matching signal, to receive the locating signal emitted by the locating label when the matching succeeds.

4. A computer-readable storage medium, **characterized in that** the computer-readable storage medium stores a program for automatic following of an object carrying vehicle, and when the program for automatic following of an object carrying vehicle is executed by a processor, the method for automatic following of an object carrying vehicle according to any one of claims 1-3 can be implemented.

5. An object carrying vehicle, **characterized in that** the object carrying vehicle comprises a memory, a processor and a program for automatic following of an object carrying vehicle stored in the memory and executable in the processor, and when the processor executes the program for automatic following of an object carrying vehicle, the method for automatic following of an object carrying vehicle according to any one of claims 1-3 can be implemented.

6. A system for automatic following of an object carrying vehicle (100), **characterized in that** the system comprises an object carrying vehicle (10), the object carrying vehicle (10) is installed with a locating label (20), and the object carrying vehicle (10) comprises:
a first receiving module (90) configured for receiving an authentication request sent by a mobile terminal (30), wherein the authentication request is generated by the mobile terminal (30) by identifying an identification code on the object carrying vehicle (10);
an authenticating module (91) configured for authenticating the mobile terminal (30) according to the authentication request, and controlling the object carrying vehicle (10) to be powered on and started up and output the locating label (20) after the authentication is passed so that a user can take out the locating label from the object carrying vehicle;
a second receiving module (92) configured for receiving a locating signal emitted by the locating label (20); and
a follow controlling module (93) configured for determining a position relation between the object carrying vehicle (10) and the locating label (20) according to the locating signal, and controlling the object carrying vehicle (10) to follow the locating label (20) according to the position relation,
wherein the locating label (20) is configured for realizing bonding with the mobile terminal (30), wherein a mode for bonding the locating label (20) and the mobile terminal (30) comprises magnetic attraction, snap fitting or adhesive bonding; and
the locating label (20) is installed to the mobile terminal (30).

7. The system (100) for automatic following of an object carrying vehicle (10) according to claim 6, **characterized in that** the follow controlling module (93) is further configured for, before the step of determining the position relation between the object carrying vehicle (10) and the locating label (20) according to the locating signal, identifying whether the locating signal emitted by the locating label (20) is valid, and, if the locating signal emitted by the locating label (20) is invalid, receiving a standby locating signal emitted by the mobile terminal (30) by using the second receiving module (92), wherein after the object carrying vehicle (10) outputs the locating label (20), the mobile terminal (30) establishes a communicative connection with the locating label (20), acquires information of the locating label (20), and generates the standby locating signal according to the information of the locating label (20).

8. The system (100) for automatic following of an object carrying vehicle (10) according to any one of claims 6-7, **characterized in that** the follow controlling module (93) is further configured for, after the mobile terminal (30) and the locating label (20) are bonded, controlling a locating base station (40) in the object carrying vehicle (10) to be started up, receiving a matching signal sent by the locating label (20) by using the locating base station (40), and matching the locating label (20) according to the matching signal, to receive the locating signal emitted by the locating label (20) by using the second receiving module (92) when the matching succeeds.

## Patentansprüche

1. Verfahren zum automatischen Verfolgen eines ein Objekt tragenden Fahrzeugs, wobei das Verfahren aufweist:
Empfangen (S1) einer von einem mobilen Endgerät gesendeten Authentifizierungsanforderung, wobei die Authentifizierungsanforderung von dem mobilen Endgerät durch Identifizieren eines Identifizierungscodes an dem Objekt tragenden Fahrzeug erzeugt wird;
Authentifizieren (S2) des mobilen Endgeräts gemäß der Authentifizierungsanforderung und Steuern des Objekt tragenden Fahrzeugs, sodass es eingeschaltet und gestartet wird und ein Ortungsetikett ausgibt, nachdem die Authentifizierung bestanden ist, sodass ein Anwender das Ortungsetikett von dem Objekt tragenden Fahrzeug mitnehmen kann;
Empfangen (S3) eines Ortungssignals, das von dem Ortungsetikett ausgegeben wird; und
Bestimmen (S4) einer Positionsbeziehung zwischen dem Objekt tragenden Fahrzeug und dem Ortungsetikett gemäß dem Ortungssignal, und Steuern des Objekt tragenden Fahrzeugs, um dem Ortungsetikett gemäß der Positionsbeziehung zu folgen,
wobei das Ortungsetikett konfiguriert ist, eine Verbindung mit dem mobilen Endgerät zu realisieren, wobei ein Modus zum Verbinden des Ortungsetiketts und des mobilen Endgeräts magnetische Anziehung, Schnappbefestigung oder Klebeverbindung aufweist; und
das Ortungsetikett an dem mobilen Endgerät angeordnet ist.

2. Verfahren zum automatischen Verfolgen eines Objekt tragenden Fahrzeugs nach Anspruch 1, **dadurch gekennzeichnet, dass** nach dem Ausgeben des Ortungsetiketts durch das Objekt tragende Fahrzeug eine Kommunikationsverbindung zwischen dem mobilen Endgerät und dem Ortungsetikett hergestellt wird, um Informationen des Ortungsetiketts zu erfassen; und
vor dem Schritt des Bestimmens einer Positionsbeziehung zwischen dem Objekt tragenden Fahrzeug und dem Ortungsetikett gemäß dem Ortungssignal, das Verfahren weiterhin das Identifizieren aufweist, ob das von dem Ortungsetikett ausgesendete Ortungssignal gültig ist, und, wenn das von dem Ortungsetikett ausgesendete Ortungssignal ungültig ist, Empfangen eines von dem mobilen Endgerät ausgesendeten Standby-Ortungssignals, wobei das Standby-Ortungssignal von dem mobilen Endgerät gemäß der Information des Ortungsetiketts erzeugt wird.

3. Verfahren zum automatischen Verfolgen eines Objekt tragenden Fahrzeugs nach einem der Ansprüche 1-2, **dadurch gekennzeichnet, dass** das Verfahren ferner aufweist: nachdem das mobile Endgerät und das Ortungsetikett verbunden sind, Steuern einer Ortungsbasisstation in dem Objekt tragenden Fahrzeug, um in Betrieb genommen zu werden, Empfangen eines von dem Ortungsetikett gesendeten Abgleichsignals unter Verwendung der Ortungsbasisstation, und Abgleichen des Ortungsetiketts gemäß dem Abgleichsignal, um das von dem Ortungsetikett ausgesendete Ortungssignal zu empfangen, wenn der Abgleich erfolgreich ist.

4. Computer-lesbares Speichermedium, **dadurch gekennzeichnet, dass** das computer-lesbare Speichermedium ein Programm zum automatischen Verfolgen eines Objekt tragenden Fahrzeugs speichert, und wenn das Programm zum automatischen Verfolgen eines Objekt tragenden Fahrzeugs von einem Prozessor ausgeführt wird, das Verfahren zum automatischen Verfolgen eines Objekt tragenden Fahrzeugs gemäß einem der Ansprüche 1 bis 3 implementiert werden kann.

5. Objekt tragendes Fahrzeug, **dadurch gekennzeichnet, dass** das Objekt tragende Fahrzeug einen Speicher, einen Prozessor und ein Programm zum automatischen Verfolgen eines Objekt tragenden Fahrzeugs aufweist, das in dem Speicher gespeichert und in dem Prozessor ausführbar ist, und wenn der Prozessor das Programm zum automatischen Verfolgen eines Objekt tragenden Fahrzeugs ausführt, das Verfahren zum automatischen Verfolgen eines Objekt tragenden Fahrzeugs nach einem der Ansprüche 1-3 implementiert werden kann.

6. System zum automatischen Verfolgen eines objekttragenden Fahrzeugs (100), **dadurch gekennzeichnet, dass** das System ein objekttragendes Fahrzeug (10) aufweist, das objekttragende Fahrzeug (10) mit einem Ortungsetikett (20) ausgestattet ist, und das objekttragende Fahrzeug (10) aufweist:
ein erstes Empfangsmodul (90), das zum Empfangen einer von einem mobilen Endgerät (30) gesendeten Authentifizierungsanforderung konfiguriert ist, wobei die Authentifizierungsanforderung von dem mobilen Endgerät (30) durch Identifizieren eines Identifizierungscodes an dem objekttragenden Fahrzeug (10) erzeugt wird;
ein Authentifizierungsmodul (91), das konfiguriert ist, das mobile Endgerät (30) gemäß der Authentifizierungsanforderung zu authentifizieren und das objekttragende Fahrzeug (10) so zu steuern, dass es eingeschaltet und in Betrieb genommen wird und das Ortungsetikett (20) ausgibt, nachdem die Authentifizierung absolviert wurde, sodass ein Anwender das Ortungsetikett aus dem objekttragenden Fahrzeug mitnehmen kann;
ein zweites Empfangsmodul (92), das zum Empfangen eines von dem Ortungsetikett (20) ausgegebenen Ortungssignals konfiguriert ist; und
ein Verfolgungssteuermodul (93), das konfiguriert ist, eine Positionsbeziehung zwischen dem Objekt tragenden Fahrzeug (10) und dem Ortungsetikett (20) gemäß dem Ortungssignal zu bestimmen, und das Objekt tragende Fahrzeug (10) zu steuern, um dem Ortungsetikett (20) gemäß der Positionsbeziehung zu folgen,
wobei das Ortungsetikett (20) konfiguriert ist, eine Verbindung mit dem mobilen Endgerät (30) zu realisieren, wobei ein Modus zum Verbinden des Ortungsetiketts (20) und des mobilen Endgeräts (30) magnetische Anziehung, Schnappverbindung oder Klebeverbindung aufweist; und
das Ortungsetikett (20) an dem mobilen Endgerät (30) angeordnet ist.

7. System (100) zum automatischen Verfolgen eines Objekt tragenden Fahrzeugs (10) nach Anspruch 6, **dadurch gekennzeichnet, dass** das Verfolgungssteuermodul (93) weiter konfiguriert ist, vor dem Schritt des Bestimmens der Positionsbeziehung zwischen dem Objekt tragenden Fahrzeug (10) und dem Ortungsetikett (20) gemäß dem Ortungssignal zu identifizieren, ob das von dem Ortungsetikett (20) angeordnete Ortungssignal gültig ist, und, wenn das von dem Ortungsetikett (20) angeordnete Ortungssignal ungültig ist, Empfangen eines Standby-Ortungssignals, das von dem mobilen Endgerät (30) unter Verwendung des zweiten Empfangsmoduls (92) ausgegeben wird, wobei das mobile Endgerät (30), nachdem das Objekt tragende Fahrzeug (10) das Ortungsetikett (20) ausgegeben hat, eine Kommunikationsverbindung mit dem Ortungsetikett (20) herstellt, Informationen des Ortungsetiketts (20) erfasst und das Standby-Ortungssignal gemäß den Informationen des Ortungsetiketts (20) erzeugt.

8. System (100) zum automatischen Verfolgen eines Objekt tragenden Fahrzeugs (10) nach einem der Ansprüche 6-7, **dadurch gekennzeichnet, dass** das Verfolgungssteuermodul (93) weiter konfiguriert ist, nach dem Verbinden des mobilen Endgeräts (30) und des Ortungsetiketts (20) eine Ortungsbasisstation (40) im Objekt tragenden Fahrzeug (10) zu steuern, um in Betrieb genommen zu werden, Empfangen eines von dem Ortungsetikett (20) gesendeten Abgleichsignals unter Verwendung der Ortungsbasisstation (40), und Abgleichen des Ortungsetiketts (20) gemäß dem Abgleichsignal, um das von dem Ortungsetikett (20) ausgesendete Ortungssignal unter Verwendung des zweiten Empfangsmoduls (92) zu empfangen, wenn der Abgleich erfolgreich ist.

## Revendications

1. Procédé destiné au suivi automatique d'un véhicule porteur d'objet, dans lequel le procédé comprend les étapes suivantes :
recevoir (S1) une demande d'authentification envoyée par un terminal mobile, dans lequel la demande d'authentification est générée par le terminal mobile en identifiant un code d'identification sur le véhicule porteur d'objet ;
authentifier (S2) le terminal mobile conformément à la demande d'authentification, et commander le véhicule porteur d'objet à allumer et à démarrer, et produire une étiquette de localisation après réalisation de l'authentification, de sorte qu'un utilisateur peut retirer l'étiquette de localisation du véhicule porteur d'objet ;
recevoir (S3) un signal de localisation émis par l'étiquette de localisation, et
déterminer (S4) une relation de position entre le véhicule porteur d'objet et l'étiquette de localisation conformément au signal de localisation, et commander le véhicule porteur d'objet pour suivre l'étiquette de localisation conformément à la relation de position,
dans lequel l'étiquette de localisation est configurée pour réaliser la liaison avec le terminal mobile, et dans lequel un mode pour lier l'étiquette de localisation et le terminal mobile comprend une attraction magnétique, un montage à pression, ou un collage par adhésif, et
l'étiquette de localisation est installée sur le terminal mobile.

2. Procédé destiné au suivi automatique d'un véhicule porteur d'objet selon la revendication 1, **caractérisé en ce qu'**après production par le véhicule porteur d'objet de l'étiquette de localisation, une connexion de communication est établie entre le terminal mobile et l'étiquette de localisation, de manière à acquérir des informations de l'étiquette de localisation, et
avant l'étape de détermination d'une relation de positon entre le véhicule porteur d'objet et l'étiquette de localisation conformément au signal de localisation, le procédé comprend en outre l'identification de si oui ou non le signal de localisation émis par l'étiquette de localisation est valide, et si le signal de localisation émis par l'étiquette de localisation est invalide, recevoir un signal de localisation d'attente émis par le terminal mobile, dans lequel le signal de localisation d'attente est généré par le terminal mobile conformément aux informations de l'étiquette de localisation.

3. Procédé destiné au suivi automatique d'un véhicule porteur d'objet selon la revendication 1 ou 2, **caractérisé en ce que** le procédé comprend en outre les étapes suivantes : après la liaison du terminal mobile et de l'étiquette de localisation, commander une station de base de localisation dans le véhicule porteur d'objet à démarrer, recevoir un signal de concordance envoyé par l'étiquette de localisation à l'aide de la station de base de localisation, et faire concorder l'étiquette de localisation conformément au signal de concordance, pour recevoir le signal de localisation émis par l'étiquette de localisation lorsque la concordance réussit.

4. Support de stockage lisible par ordinateur, **caractérisé en ce que** le support de stockage lisible par ordinateur stocke un programme pour le suivi automatique d'un véhicule porteur d'objet, et lorsque le programme pour le suivi automatique d'un véhicule porteur d'objet est exécuté par un processeur, le procédé pour le suivi automatique d'un véhicule porteur d'objet conformément à l'une quelconque des revendications 1 à 3 peut être mis en œuvre.

5. Véhicule porteur d'objet, **caractérisé en ce que** le véhicule porteur d'objet comprend une mémoire, un processeur, et un programme pour le suivi automatique d'un véhicule porteur d'objet stocké dans la mémoire, et exécutable dans le processeur, et lorsque le procédé exécute le programme pour le suivi automatique d'un véhicule porteur d'objet, le procédé pour le suivi automatique d'un véhicule porteur d'objet conformément à l'une quelconque des revendications 1 à 3 peut être mis en œuvre.

6. Système destiné au suivi automatique d'un véhicule porteur d'objet (100), **caractérisé en ce que** le système comprend un véhicule porteur d'objet (10), le véhicule porteur d'objet (10) est installé avec une étiquette de localisation (20), et le véhicule porteur d'objet (10) comprend :
un premier module de réception (90) configuré pour recevoir une demande d'authentification envoyée par un terminal mobile (30), dans lequel la demande d'authentification est générée par le terminal mobile (30) en identifiant un code d'identification sur le véhicule porteur d'objet (10) ;
un module d'authentification (91) configuré pour authentifier le terminal mobile (30) conformément à la demande d'authentification, et commander le véhicule porteur d'objet (10) à allumer et démarrer, et produire l'étiquette de localisation (20) après réalisation de l'authentification, de sorte qu'un utilisateur peut retirer l'étiquette de localisation du véhicule porteur d'objet ;
un second module de de réception (92) configuré pour recevoir un signal de localisation émis par l'étiquette de localisation (20), et
un module de commande de suivi (93) configuré pour déterminer une relation de position entre le véhicule porteur d'objet (10) et l'étiquette de localisation (20) conformément au signal de localisation, et commander le véhicule porteur d'objet (10) pour suivre l'étiquette de localisation (20) conformément à la relation de position,
dans lequel l'étiquette de localisation (20) est configurée pour réaliser la liaison avec le terminal mobile (30), et dans lequel un mode pour lier **l'étiquette** de localisation (20) et le terminal mobile (30) comprend une attraction magnétique, un montage à pression, ou un collage par adhésif, et
**l'étiquette** de localisation (20) est installée sur le terminal mobile (30.

7. Système (100) destiné au suivi automatique d'un véhicule porteur d'objet (10) conformément à la revendication 3, **caractérisé en ce que** le module de commande de suivi (93) est en outre configuré pour, avant l'étape de détermination d'une relation de positon entre le véhicule porteur d'objet (10) et l'étiquette de localisation (20) conformément au signal de localisation, identifier si oui ou non le signal de localisation émis par l'étiquette de localisation (20) est valide, et si le signal de localisation émis par l'étiquette de localisation (20) est invalide, recevoir un signal de localisation d'attente émis par le terminal mobile (30) à l'aide du second module de réception (92), dans lequel après production par le véhicule porteur d'objet (10) de l'étiquette de localisation (20), le terminal mobile (30) établit une connexion de communication avec **l'étiquette** de localisation (20), acquiert des informations de **l'étiquette** de localisation (20), et génère le signal de localisation d'attente conformément aux informations de l'étiquette de localisation (20).

8. Système (100) destiné au suivi automatique d'un véhicule porteur d'objet (10) selon la revendication 6 ou 7, **caractérisé en ce que** le module de commande de suivi (93) est en outre configuré pour après la liaison du terminal mobile (30) et de l'étiquette de localisation (20), commander une station de base de localisation (40) dans le véhicule porteur d'objet (10) à démarrer, recevoir un signal de concordance envoyé par **l'étiquette** de localisation (20) à l'aide de la station de base de localisation (40), et faire concorder l'étiquette localisation (20) conformément au signal de concordance, pour recevoir le signal de localisation émis par l'étiquette de localisation (20) à l'aide du second module de réception (92) lorsque la concordance réussit.
